Europäisches Patentamt

European Patent Office

Office européen des brevets

(19)

(11) EP 1 732 040 A1

(12) EUROPEAN PATENT APPLICATION
published in accordance with Art. 158(3) EPC

(43) Date of publication:
13.12.2006 Bulletin 2006/50

(51) Int Cl.:
*G06T 15/00* (2006.01)

(21) Application number: 05709419.5

(22) Date of filing: 27.01.2005

(86) International application number:
PCT/JP2005/001145

(87) International publication number:
WO 2005/101319 (27.10.2005 Gazette 2005/43)

(84) Designated Contracting States:
DE FR GB

(30) Priority: 31.03.2004 JP 2004107999
06.01.2005 JP 2005001795

(71) Applicant: Konami Digital Entertainment Co., Ltd.
Minato-ku
Tokyo 106-6114 (JP)

(72) Inventor: KOMATSUMOTO, Hidenori,
c/oKonami Digit. Ent.Co.Ltd
Minato-ku, Tokyo 1066114 (JP)

(74) Representative: Winter, Brandl, Fürniss, Hübner
Röss, Kaiser,
Polte Partnerschaft Patent- und
Rechtsanwaltskanzlei
Alois-Steinecker-Strasse 22
85354 Freising (DE)

(54) **IMAGE PROCESSOR, IMAGE PROCESSING METHOD AND INFORMATION STORAGE MEDIUM**

(57) To provide an image processor capable of improving visibility of an object when a picture of a virtual three-dimensional space is displayed. The image processor is an image processor for displaying an image representative of a picture of a water droplet object (42), a viewpoint (54) or the like in a virtual three-dimensional space (50) where the water droplet object (42) and the viewpoint (54) are placed, comprising: distance data calculation means for calculating distance data concerning the water droplet object (42) and the viewpoint (54); moving state determination means for determining a moving distance or a moving speed of the water droplet object (42) in the virtual three-dimensional space (50), based on the distance data; object moving means for moving the water droplet object (42) based on the determined moving distance or moving speed; and image displaying means for displaying an image representative of a picture of the water droplet object (42) moving in the virtual three-dimensional space (50) viewed from the viewpoint (54).

FIG.2

EP 1 732 040 A1

## Description

### TECHNICAL FIELD

The present invention relates to an image processor, an image processing method, and an information storage medium.

### BACKGROUND ART

Three-dimensional computer graphics are known in which a virtual three-dimensional space where the object and the viewpoint are defined is constructed in a computer memory and a picture of the object viewed from the viewpoint is displayed on a monitor. Use of three-dimensional computer graphics enables preferable realization of the virtual reality.
Japanese Patent Laid-open Publication No. 2002-163684

### DISCLOSURE OF INVENTION

Problems to be Solved by the Invention

According to conventional three-dimensional computer graphics, in many cases, the shape data of the respective objects placed in the virtual three-dimensional space are prepared in advance and the sizes of the respective objects placed in the virtual three-dimensional space remain unchanged.

However, there is a problem such that, as the viewpoint moves further from the object and the part of the object which is displayed on the display screen becomes accordingly smaller, the object accordingly becomes unclear and impossible to identify.

The present invention has been conceived in view of the above, and the object of the present invention is to provide an image processor capable of improving visibility of the object when a picture of the virtual three-dimensional space is displayed, an image processing method, and an information storage medium.

Means for Solving the Problems

In order to solve the above described problems, there is provided an image processor for displaying an image representative of a picture of an object viewed from a viewpoint in a virtual three-dimensional space where the object and the viewpoint are placed, comprising: distance data calculation means for calculating distance data concerning the object and the viewpoint; moving state determination means for determining at least one of a moving distance and a moving speed of the object in the virtual three-dimensional space, based on the distance data; object moving means for moving the object in the virtual three-dimensional space based on at least one of the moving distance and the moving speed of the object, which is determined by the moving state determination means; and image displaying means for displaying an image representative of a picture of the object moving in the virtual three-dimensional space viewed from the viewpoint.

Also, according to the present invention, there is provided an image processing method for displaying an image representative of a picture of an object viewed from a viewpoint in a virtual three-dimensional space where the object and the viewpoint are placed, comprising: a distance data calculating step of calculating distance data concerning the object and the viewpoint; a moving state determining step of determining at least one of a moving distance and a moving speed of the object in the virtual three-dimensional space, based on the distance data; an object moving step of moving the object in the virtual three-dimensional space based on at least one of the moving distance and the moving speed of the object, which is determined by the moving state determination means; and an image displaying step of displaying an image representative of a picture of the object moving in the virtual three-dimensional space viewed from the viewpoint.

Also, according to the present invention, there is provided a computer readable data storage medium for having a computer, such as a home-use game device, a commercial game device, a portable game device, a portable phone, a personal computer, a server computer, and so forth, to function as distance data calculation means for calculating distance data concerning an object and a viewpoint both placed in a virtual three-dimensional space; moving state determination means for determining at least one of a moving distance and a moving speed of the object in the virtual three-dimensional space, based on the distance data; object moving means for moving the object in the virtual three-dimensional space based on at least one of the moving distance and the moving speed of the object, which is determined by the moving state determination means; and image displaying means for displaying an image representative of a picture of the object moving in the virtual three-dimensional space viewed from the viewpoint.

The program may be stored in a computer readable information storage medium, for example, a CD-ROM, a DVD-ROM, a ROM cartridge, and so forth.

According to the present invention, at least one of the moving distance and speed of the object in the virtual three-dimensional space may be determined based on the distance data concerning the object and viewpoint both placed in the virtual three-dimensional space.

The object may move in the virtual three-dimensional space based on the moving distance or speed.

With this arrangement, it is possible to arrange such that the moving distance of the object is made longer or the moving speed is made slower when the viewpoint is defined farther from the object, and that the moving distance of the object is made shorter or the moving speed is made faster when the viewpoint is defined closer to the object. This makes it possible to improve visibility of the object when a scene created in the virtual three-dimensional space is displayed.

According to one aspect of the present invention, the image processor may further comprise size information determination means for determining size information indicative of a size of the object placed in the virtual three-dimensional space, based on the distance data; and object enlargement and reduction means for enlarging or reducing the object according to the size information determined by the size information determination means. The image displaying means may display an image representative of a picture of the object enlarged or reduced viewed from the viewpoint in the virtual three-dimensional space.

According to this aspect, the size information indicative of the size of the object may be determined based on the distance data concerning the object and viewpoint both placed in the virtual three-dimensional space.

The object may be reduced or enlarged according to the size information.

With this arrangement, it is possible to arrange such that the object enlarged when the viewpoint is defined farther from the object, or the object is made reduced when the viewpoint is defined closer to the object. This makes it possible to improve visibility of the object when the scene created in the virtual three-dimensional space is displayed.

Here, the distance data may be data indicative of a distance between a position associated with the object and a position of the viewpoint.

The position associated with an object may be, for example, a position of a representative position or the like of the object or a position of a representative position or the like of another object corresponding to the object.

Also, the size information determination means may determine a rate by which the object is enlarged or reduced as the size information of the object based on the distance data, and the object enlargement and reduction means may enlarge or reduce the object having a predetermined size by the rate.

With this arrangement, objects can be readily displayed in different sizes.

BRIEF DESCRIPTION OF DRAWINGS

Fig. 1 is a diagram showing a hardware structure of a game device (an image processor) in an embodiment according to the present invention;
Fig. 2 is a diagram showing one example of a game screen;
Fig. 3 is a diagram showing another example of a game screen;
Fig. 4 is a perspective view showing a virtual three-dimensional space;

Fig. 5 is a diagram showing an exaggerated object;
Fig. 6 is a diagram showing a texture image to be mapped on the exaggerated object;
Fig. 7 is a diagram showing a relationship between a magnification rate and the distance between the viewpoint and the exaggerated object;
Fig. 8 is a diagram showing a trajectory of the exaggerated object;
Fig. 9 is a diagram showing relationship between a trajectory change rate and the distance between the viewpoint and the exaggerated object;
Fig. 10 is a diagram showing a modified example concerning relationship between a trajectory change rate and the distance between the viewpoint and the exaggerated object;
Fig. 11 is a flowchart showing image processing carried out by the game device; and
Fig. 12 is a flowchart showing image processing carried out by the game device.

BEST MODE FOR CARRYING OUT THE INVENTION

In the following, an embodiment of the present invention will be described in detail based on the accompanied drawings.

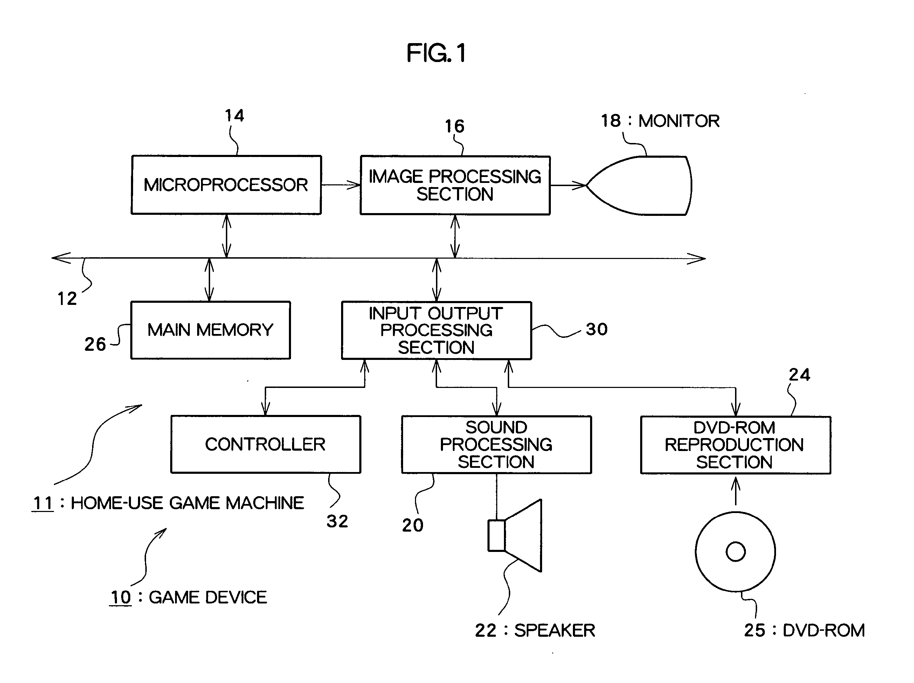

Fig.1 is a diagram showing a structure of a game device according to one embodiment of the present invention. The game device 10 shown in Fig. 1 concerns one formation of an image processor according to the present invention, which is formed by attaching a DVD-ROM 25, which serves as a computer readable data storage medium, to a home-use game machine (a computer game system) 11, which is connected to a monitor 18 and a speaker 22.

Here, a game program or game data stored in the DVD-ROM 25 is read out and supplied to the home-use game machine 11. Alternatively, any other information storage medium, such as a CD-ROM, a ROM cartridge, or the like, may be similarly employed. Also, a game program and/or game data may be supplied to the home-use game machine 11 from a remote place via a data communication network such as the Internet.

In the home-use game machine 11, a microprocessor 14, an image processing section 16, a main memory 26, and an input output processing section 30 are connected to one another via a bus 12 so as to attain mutual data communication. Further, , a controller 32, a sound processing section 20, and a DVD-ROM reproduction section 24 are connected to the input output processing section 30. The structural elements other than the controller 32 of the home-use game machine 11 are incorporated in a housing. A household television receiver, for example, may be used as the monitor 18, and a household television built-in speaker, for example, may be used as the speaker 22.

The microprocessor 14 controls the respective sections of the home-use game machine 11 based on an operating system stored in the ROM (not shown) or a game program read from the DVD-ROM 25. Use of the bus 12 enables exchange of address and data among the respective sections of the home-use game machine 11. Also, the main memory 26 is formed so as to include a RAM, to which a game program and game data read from the DVD-ROM 25 are written as required. The RAM is used also as a workspace for the microprocessor 14.

The image processing section 16 is formed so as to include a VRAM, and renders a game screen image in the VRAM based on the image data received from the microprocessor 14. Also, the image processing section 16 converts the content of the rendered game screen image into a video signal, and then outputs to the monitor 18 at predetermined timing.

That is, the image processing section 16 receives from the microprocessor 14 the vertex coordinates (X, Y, Z), vertex color information (R, G, B), texture coordinates (VX, VY), alpha value, and so on of each polygon in the viewpoint coordinate system. Then, while using the received information, the image processing section 16 writes the color information, Z value (depth information), alpha ($\alpha$) value, or the like of each of the pixels which constitute the display screen image, into the VRAM. The resultant display image is output to the monitor 18 at predetermined timing.

In writing a pixel (the color information, Z value, and alpha value) into the VRAM, each of pixel tests can be desirably carried out. As a pixel test, an alpha test, a destination alpha test, and a depth test are available. A desired pixel test is carried out according to an instruction sent from the microprocessor 14.

In an alpha test among these tests, the alpha value of a writing pixel is compared to a predetermined reference alpha value. When a designated condition is not satisfied, writing of the pixel is restricted.

In a destination alpha test, the alpha value (a destination alpha value) of a pixel at the writing destination pixel (the pixel which is already written at the writing destination address in the VRAM) is compared to a predetermined value (0 x 80). When a designated condition is not satisfied, the writing of the pixel is restricted.

In a depth test, the Z value of the writing pixel is compared to the Z value of the Z buffer (formed in the VRAM). When a designated condition is not satisfied, the writing of the pixel is restricted.

Also, in writing a pixel into the VRAM, masking is applicable so that a writing operation of the color information, Z value, and alpha value of each pixel can be preferably prohibited.

The input output processing section 30 serves as an interface for relaying data communication between the microprocessor 14 and the controller 32, sound processing section 20, and DVD-ROM reproduction section 24, respectively. The controller 32 serves as an input means via which a player can operate a game. The input output processing section 30 scans the operating condition of the various buttons of the controller 32 in a constant period (for example, every 1/60 seconds), and forwards an operating signal indicative of the scanning result to the microprocessor 14 via the bus 12.

The microprocessor 14 makes judgment on the game operation carried out by the player based on the operating signal. The sound processing section 20 is formed so as to include a sound buffer, and reproduces data such as music, game sound effects, and so forth, which is read from the DVD-ROM 25 and stored in the sound buffer or the like, for output via the speaker 22. The DVD-ROM reproduction section 24 reads out a game program and game data recorded in the DVD-ROM 25 in accordance with an instruction sent from the microprocessor 14.

In the following, a technique for preferably displaying a state in which a water droplet is splashed in a virtual three-dimensional space, using a game device 10 having the above-described hardware structure will be described.

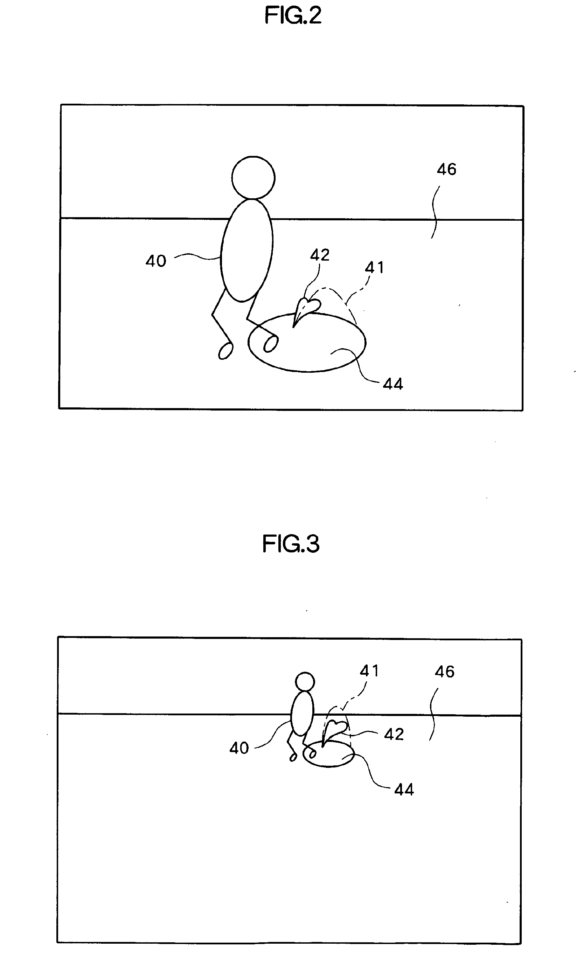

Figs. 2 and 3 are diagrams showing an example of a game screen displayed on the monitor 18. As shown in Fig. 2, a puddle object 44 and a game character object 40 are placed on a plate-like game stage object 46, and a water droplet object (an exaggerated object) 42 is displayed above the puddle object 44, more particularly, on the left leg side of the game character object 40. That is, on the game screen shown in Fig. 2, the left leg of the game character object 40 is located above the puddle object 44, and a state in which a water droplet object 42 is caused to be splashed from the puddle object 44 by the left leg of the game character object 40 is displayed.

On the other hand, the game screen shown in Fig. 3 shows a scene which results when the same situation created in the virtual three-dimensional space is viewed from a viewpoint which is located farther from the water droplet object 42 or the like, compared to the game screen shown in Fig. 2.

As is obvious from comparison between these two game screens, the water droplet object 42 on the game screen of Fig. 2 has a size (dimension) corresponding to the distance between the foot and thigh, while the water droplet object 42 on the game screen of Fig. 3 has a size corresponding to the distance between the foot and hips of the game character object 40. That is, in this embodiment, the size of the water droplet object 42 in the virtual three-dimensional space is made accordingly larger as the viewpoint used in creation of the game screen becomes farther from the water droplet object 42, whereby the water droplet object 42 is displayed in an exaggerated manner.

In this manner, whereas in normal display the display size (that is, the displayed area in the game screen) of the water droplet object 42 on the game screen generally becomes smaller when the viewpoint is defined farther from the water droplet object 42, and the water droplet objects 42 accordingly becomes unclear and difficult to identify, in this embodiment, the water droplet object 42 is displayed in a larger displayed size than that in normal display, and the above described deficiency can be resolved.

Further, in this embodiment, a distance by which the water droplet object 42 moves (a moving distance) and a speed at which the water droplet object 42 moves (a moving speed) are varied according to the distance between the viewpoint and the water droplet object 42. For example, in this embodiment, as is obvious from comparison between the trajectory 41 of the water droplet object 42 shown in Fig. 2 and that in Fig. 3, when a picture of the water droplet object 42 viewed from a farther viewpoint is displayed on the game screen, the water droplet object 42 is arranged so as to move on a larger trajectory in the virtual three-dimensional space, compared to a case where a picture of the water droplet object 42 is viewed from a closer viewpoint is displayed on the game screen.

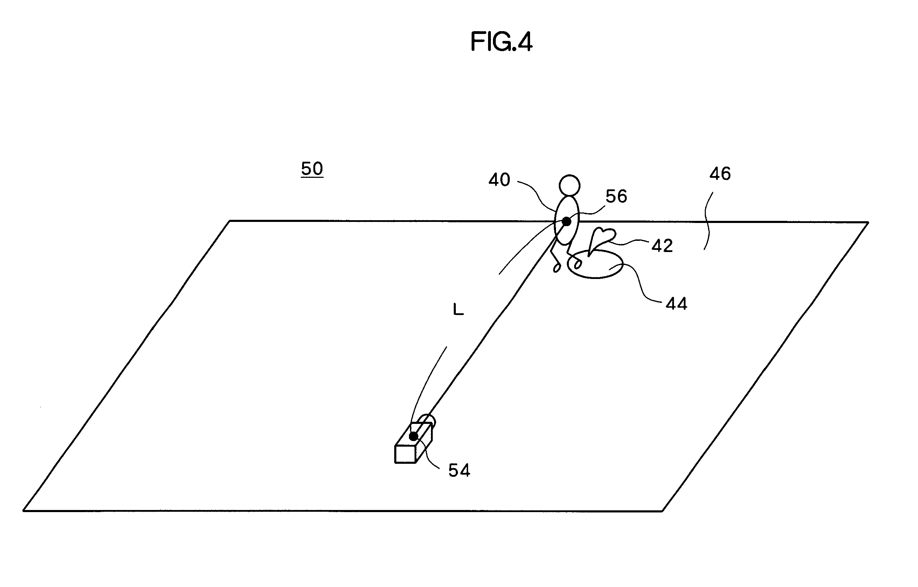

Fig. 4 is a perspective view showing the picture of the virtual three-dimensional space.

The virtual three-dimensional space 50 shown in Fig. 4 is constructed in the main memory 26 of the game device 10. Specifically, a puddle object 44 and a game character object 40 are placed on a plate-like game stage object 46. The puddle object 44 is a static object which does not change in position and posture as time passes. Meanwhile, the game character obj ect 40 is a dynamic object which changes in position and/or posture in the virtual three-dimensional space 50 according to a program or an operation carried out using the controller 32. Above the puddle object 44, the water droplet object 42 is shown splashed.

The trajectory (the movement path) of the water droplet object 42 is calculated every time based on the motion data stored in the DVD-ROM 25 or using a predetermined operational expression. The water droplet object 42 is also a dynamic object. Each object is formed using one or more polygons, and each polygon has a texture mapped thereon.

In the virtual three-dimensional space 50, a viewpoint 54 which is necessary to create a game screen is also defined. In this embodiment, a picture of the game character object 40, the puddle obj ect 44, and the water droplet obj ect 42 viewed from the viewpoint 54 is displayed as a game screen image on the monitor 18. In the above, a representative point 56 is defined on the game character object 40, and the distance L between the representative point 56 and the viewpoint 54 is calculated. Then, the water droplet object 42 and the trajectory of the water droplet object 42 are enlarged according to the distance L.

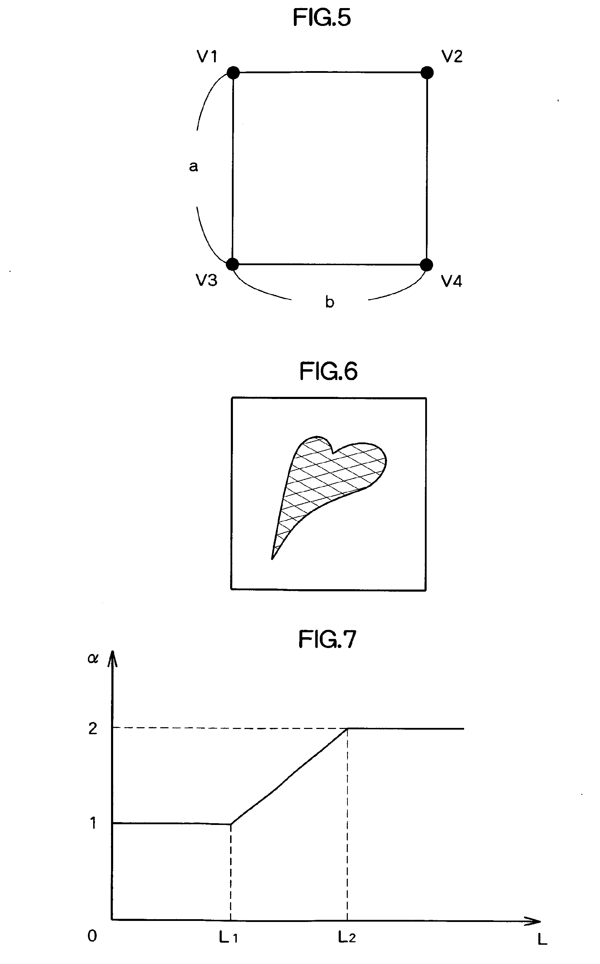

Fig. 5 is a diagram showing a water droplet object 42, and Fig. 6 is a diagram showing a texture mapped on the water droplet object 42. The water droplet object 42 is formed using a rectangle polygon and has four vertices V1 through V4. In the initial state in which the water droplet object 42 is stored in the DVD-ROM 25, the length of the side connecting the vertices V1 and V3 and the length of the side connecting the vertices V2 and V4 are respectively defined as "a", while the length of the side connecting the vertices V1 and V2 and the length of the side connecting the vertices V3 and V4 are respectively defined as "b".

Then, in this embodiment, a magnification rate $\alpha$ is determined according to the distance L between the viewpoint 54 and the representative point 56 defined on the game character object 40. Then, the magnification rate $\alpha$ is multiplied to the lengths "a" and "b" of the respective sides of the water droplet object 42, so that the size of the water droplet object 42 is changed accordingly.

Fig. 7 is a diagram showing the relationship between the magnification rate $\alpha$ and the distance L between the viewpoint 54 and the representative point 56 defined on the game character object 40. As shown in Fig. 7, when the distance L is equal to or shorter than a predetermined distance L1, the magnification rate $\alpha$ is defined as one. When the distance L is equal to or larger than a predetermined distance L2, the magnification rate $\alpha$ is defined as two ($0<L1<L2$). When the distance L is between the predetermined distance L1 and the predetermined distance L2, the magnification rate $\alpha$ gradually increases beginning with one as the distance L increases until the magnification rate $\alpha$ becomes two when the distance L becomes equal to the predetermined distance L2.

With this arrangement, the size of the water droplet object 42 in the virtual three-dimensional space 50 remains at a prescript value until the distance L becomes equal to the predetermined distance L1. Thereafter, the size becomes larger until the distance L reaches the predetermined distance L2. When the distance L becomes equal to the predetermined distance L2, the water droplet object 42 reaches four times (twice for each side) in size. Thereafter, the four times as large size remains relative to the distance L equal to or larger than the predetermined distance L2.

Further, in this embodiment, various moving distances such as the height of the trajectory (the distance from the game stage object 46) and the horizontal distance from the position at which the water droplet is generated to the point to which the water droplet object 42 drops (a dropped position), and so forth are changed or the moving speed of the water droplet object 42 is changed according to the distance L. With the above, the movement of the water droplet object 42 can be exaggerated, and the visibility of the water droplet object 42 can be further improved.

In order to change the moving distance and/or speed of the water droplet object 42, for example, the motion data may be corrected according to the magnification rate $\alpha$ or a parameter (a trajectory change rate $\beta$ to be described later) which is determined according to the distance L between the representative point 56 and the viewpoint 54 other than the magnification rate $\alpha$. Alternatively, a parameter included in an operational expression for calculating the trajectory may be corrected according to the magnification rate $\alpha$ or the trajectory change rate $\beta$.

Specifically, when the trajectory of the water droplet object 42 forms a parabola, the trajectory can be calculated using the operational expression indicative of a parabola described below.

$$x=vx \times t \qquad (1)$$

$$y=vy \times t - 1/2 \times g \times t^2 \qquad (2)$$

Here, "x" represents vector quantity and indicates the distance from the generation position of the water droplet object 42. "y" represents scalar quantity and indicates the height from the generation position of the water droplet object 42. "t" represents a period of time elapsed from the moment at which the water droplet object 42 is generated. "vx" represents a horizontal component (vector quantity) of the initial speed of the water droplet object 42. "vy" represents a vertical component of the initial speed of the water droplet object 42. Also, "g" represents gravity acceleration.

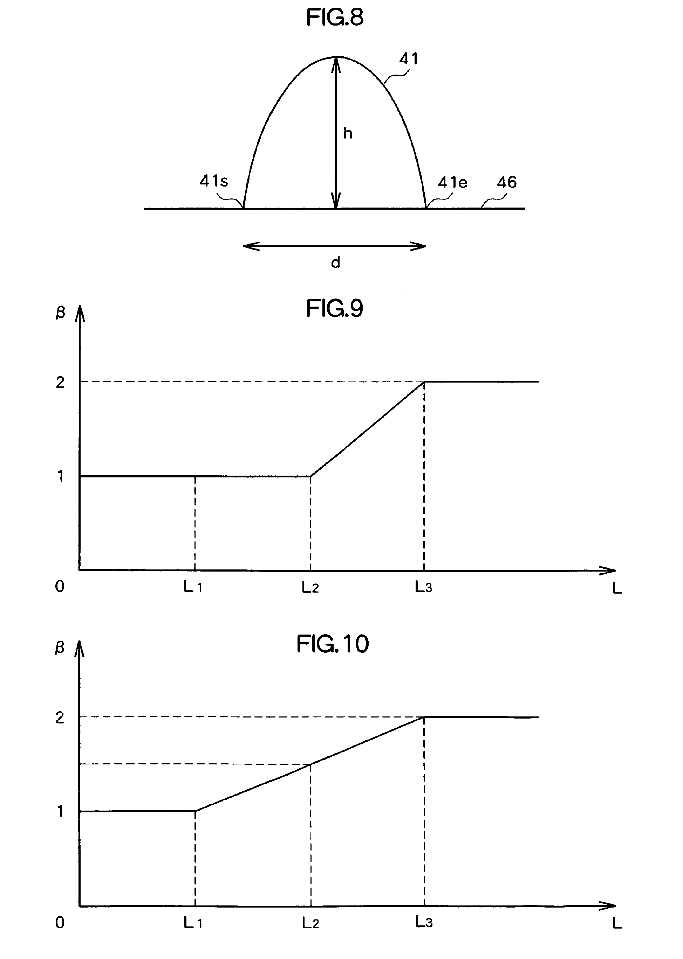

Fig. 8 shows the parabolic trajectory 41 of the water droplet object 42. In the following, the height h from the game stage object 46 and the horizontal distance d between the generation position 41s and the dropped position 41e are determined according to the distance L between the representative point 56 and the viewpoint 54.

That is, supposing that the period of time elapsed after the moment at which the water droplet object 42 is generated on the game stage object 46 until the moment at which the trajectory 41 reaches the highest point (hereinafter referred to as a rising time period) is defined as T, the horizontal component vy of the initial speed and gravity acceleration g are defined as follows.

$$vy=2 \times h/T \qquad (3)$$

$$g = 2 \times h/T^2 \qquad (4)$$

The moving distance of the water droplet object 42 can be changed according to the distance L using these expressions as follows.

That is, in order to arrange such that the larger distance L results in the higher point to which the water droplet object 42 is splashed up, the height h is calculated, for example, using the following expression (5) and a trajectory change rate β which takes the larger value which is equal to or larger than one as the distance L takes the larger value. Then, the height h is substituted into the above expressions (3) and (4) to thereby obtain the horizontal component vy and gravity acceleration g of the initial speed. Thereafter, the obtained horizontal component vy and gravity acceleration g of the initial speed are substituted into the expressions (1) and (2) to thereby calculate the trajectory 41 of the water droplet object 42. Here, "h0" represents a reference height.

$$h=\beta \times h0 \qquad (5)$$

Also, an arrangement may also be applicable in which the larger distance L results in the slower moving speed of the water droplet object 42 whereby the emerging time period (a period of time which the water droplet object 42 takes to move from the generation position 41s to the dropped position 41e) becomes longer. In this case, the rising time period T is calculated using the trajectory change rate β and the following expression (6), for example. The obtained rising time period T is substituted into the above mentioned expressions (3) and (4) to thereby obtain the horizontal component vy and gravity acceleration g of the initial speed. Then, the obtained horizontal component vy and gravity acceleration g of the initial speed are substituted into the above mentioned expressions (1) and (2) to thereby calculate the trajectory 41 of the water droplet object 42. Here, "T0" represents a reference rising time period.

$$T=\beta \times T0 \qquad (6)$$

It should be noted that the height h and the rising time period T may both be obtained using the above mentioned expressions (5) and (6), and the obtained height h and rising time period T may be substituted into the expressions (1) through (4) to thereby calculate the trajectory 41 of the water droplet object 42.

With the above arrangement, as the distance L takes the larger value, the water droplet object 42 is splashed to the higher point, and the moving distance of the water droplet object 42 becomes accordingly longer. Moreover, the moving speed of the water droplet object 42 becomes slower, and the emerging time period becomes accordingly longer.

Further, the horizontal distance d may be changed according to the distance L. Specifically, while supposing that the reference horizontal distance is defined as d0, the horizontal distance d is obtained using the following expression (7). The obtained horizontal distance d may be substituted into the following expression (8), to thereby obtain the magnitude |vx| of the horizontal component of the initial speed.

$$d = \beta \times d0 \qquad (7)$$

$$|vx| = d / (2 \times T) \qquad (8)$$

Further, in the case where the trajectory 41 of the water droplet object 42 is calculated based on the motion data (the sets of coordinates of the representative points in the trajectory 41), an arrangement such that the longer distance L results in the smaller interpolation interval enables reduction of the moving speed of the water droplet object 42.

The trajectory change rate β used in the above described processing may be determined according to the table shown in Fig. 9.

The table shown in Fig. 9 defines the trajectory change rate β as one with respect to the distance L being equal to or shorter than the predetermined distance L2. Also, with respect to the distance L equal to or longer than the predetermined distance L3, the trajectory change rate β is defined as two (0<L1<L2<L3). Further, while the distance L remains between the predetermined distance L2 and the predetermined distance L3, the trajectory change rate β gradually increases beginning with one as the distance L increases until the trajectory change rate β becomes two when the distance L becomes equal to the predetermined distance L3.

With this arrangement, the moving distance and/or speed of the water droplet object 42 moving in virtual three-dimensional space 50 remain normal while the distance L is equal to or shorter than the predetermined distance L2. While the distance L remains between the predetermined distance L2 and the predetermined distance L3, the moving distance and/or speed become/becomes gradually longer and/or faster, respectively, until the moving distance and/or speed become/becomes double when the distance L becomes equal to the predetermined distance L3. Thereafter, the moving distance and/or speed remain/remains double when the distance L becomes equal to or longer than the predetermined distance L3.

According to the table shown in Fig. 9, the moving distance and/or speed of the water droplet object 42 are/is changed when the distance L is equal to or larger than the predetermined distance L2, that is, when size enlargement of the water droplet object 42 according to the table shown in Fig. 7 is not applied. With the above, an arrangement such that exaggeration by changing the trajectory begins to be applied after termination of the exaggeration by means of size enlargement can be realized.

It should be noted that the table shown in Fig. 10 may be used in place of the table shown in Fig. 9.

The table shown in Fig. 10 defines the trajectory change rate β as one with respect to the distance L being equal to or shorter than the predetermined distance L1. Also, with respect to the distance L equal to or longer than the predetermined distance L3, the trajectory change rate β is defined as two (0<L1<L2<L3). Further, while the distance L remains between the predetermined distance L1 and the predetermined distance L3, the trajectory change rate β gradually increases beginning with one as the distance L increases until the trajectory change rate becomes two when the distance L becomes equal to the predetermined distance L3.

With this arrangement, the moving distance and/or speed of the water droplet object 42 moving in virtual three-dimensional space 50 remain/remains normal while the distance L remains equal to or shorter than the predetermined distance L1. While the distance L remains between the predetermined distance L1 and the predetermined distance L3, the moving distance and/or speed become/becomes gradually longer and/or faster, respectively, until the moving distance and/or speed become/becomes double when the distance L becomes equal to the predetermined distance L3. Thereafter, the moving distance and/or speed remain/remains double when the distance L becomes equal to or longer than the predetermined distance L3.

According to the table shown in Fig. 10, the moving distance and/or speed of the water droplet object 42 begins to change when the size enlargement of the water droplet object 42 according to the table shown in Fig. 7 begins.

Here, a process to create a game screen image to be carried out by the game device 10 will be described.

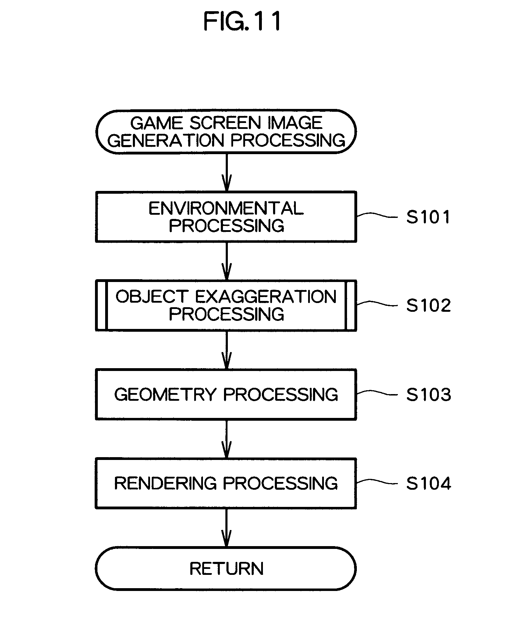

Fig. 11 is a flowchart showing game screen image creation processing to be carried out by the game device 10. This processing is carried out by the game device 10 based on the program stored in the DVD-ROM 25 for every predetermined period of time (for example, 1/60 second).

As shown in Fig. 11, in the game device 10, the microprocessor 14 initially carries out game environment processing based on the game program and game data read from the DVD-ROM 25 (S101). In the game environment processing, the positions and postures of all static and dynamic objects located in the virtual three-dimensional space 50 are calculated.

In particular, as for an exaggerated object (an object to be subjected to size reduction and moving distance and speed changing), such as a water droplet object 42, among the dynamic objects, the position and posture of the exaggerated object are determined using an trajectory change rate β which is determined at the time when each exaggerated object is generated (emerged) in the object exaggeration processing, to be described later (S102).

Also, in the game environmental processing, a viewpoint and the field of view range are calculated. Then, an object which moves out of the field of view range is exempted from the subsequent game processing.

Then, when an exaggerated object (an object to be enlarged), such as a water droplet object 42, is located within the field of view range, object exaggeration processing is applied to the exaggerated object (S102). The object exaggeration processing will be described later in detail.

Then, the microprocessor 14 carries out geometry processing (S103). In the geometry processing, specifically, coordinate conversion from the world coordinate system to the viewpoint coordinate system is carried out. Also, the color information concerning the vertices of each of the polygons constituting an object is corrected based on the light source information (the color and position of the light source). Further, clipping processing is additionally carried out.

Subsequently, the microprocessor 14 carries out rendering processing (S104). In this processing, specifically, the microprocessor 14 sends the vertex coordinates, vertex color information, texture coordinates, and alpha value of each of the polygons belonging to the field of view range to the image processing section 16. The image processing section 16 in turn forms a display image in the VRAM based on the information. The game image formed in the VRAM of the image processing section 16 is read out at predetermined timing and displayed on the monitor 18.

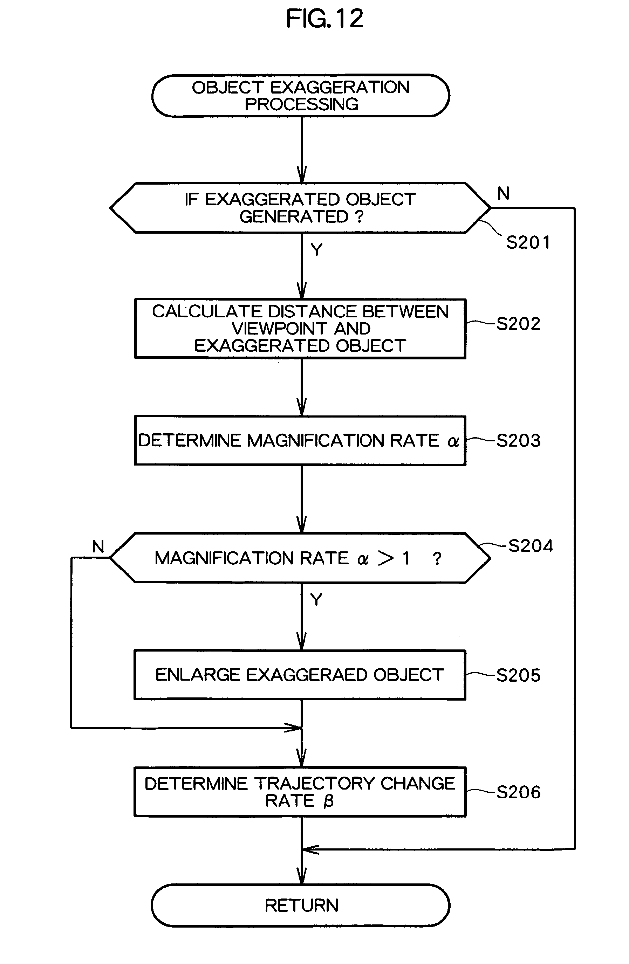

Fig. 12 is a flowchart showing in detail the object exaggeration processing (S102) in the game screen image generation processing shown in Fig. 11. As shown in Fig. 12, in the object exaggeration processing, whether or not an exaggerated object such as a water droplet object 42 or the like is generated (emerged) in the virtual three-dimensional space 50 is initially determined (S201). Specifically, a water droplet object 42 is designed to be generated in the virtual three-dimensional space 50 when the leg of the game character object 40 touches the puddle object 44. Therefore, it is determined here as to whether or not the leg of the game character object 40 touches the puddle object 44. Then, when it is determined that no exaggerated object is generated, the object exaggeration processing is terminated.

On the other hand, when it is determined that an exaggerated object is generated, the distance L between the exaggerated object and the viewpoint is calculated (S202). For example, in the above-described example, the distance L between the viewpoint 54 and the representative point 56 defined on the game character object 40, which is a position associated with the water droplet object 42, or the exaggerated object, is calculated.

Thereafter, according to the relationship shown in Fig. 7, a magnification rate α is calculated based on the calculated distance L (S203). Specifically, when the relationship shown in Fig. 7 is held in a table, the magnification rate α corresponding to the distance L is read from the table. Also, when the relationship shown in Fig. 7 is expressed by an operational expression, the distance L is substituted into the operational expression to thereby calculate the magnification rate α.

In the above, when the magnification rate α is not one (S204), the exaggerated object such as the water droplet object 42 is enlarged according to the magnification rate α (S205). Specifically, in the case of the water droplet object 42, the lengths a, b of the respective sides are changed to a×α and b×α, respectively. Then, geometry processing (S103) and rendering processing (S104) are applied to the exaggerated object having been subjected to the above described size changing.

Further, a trajectory change rate β is determined using the distance L calculated at S202 (S206). Specifically, when the relationship shown in Fig. 9 or 10 is held in a table, a trajectory change rate β corresponding to the distance L is read from the table.

Also, when the relationship shown in Fig. 9 or 10 is expressed by the operational expression, the distance L is substituted into the operational expression to thereby calculate the trajectory change rate β. In the environmental processing (S101) shown in Fig. 11, the position and posture of an exaggerated object which is already generated in the virtual three-dimensional space 50 are calculated using this trajectory change rate β.

According to the above-described game device 10, based on the distance data concerning an exaggerated object and the viewpoint, specifically, the data indicative of the distance between the viewpoint and the position of an object associated with the exaggerated object, the size of the exaggerated object placed in the virtual three-dimensional space 50 is enlarged as the distance becomes longer, whereby the size in which the exaggerated object is displayed on the game screen is enlarged.

This arrangement allows a user to readily identify the exaggerated object even with respect to the viewpoint defined farther from the exaggerated object. That is, the visibility of an exaggerated object can be improved.

Also, as a longer moving distance of the exaggerated object results as the distance between the viewpoint and the exaggerated object becomes longer, or as a longer emerging time period is resulted as the moving speed becomes slower, visibility of the exaggerated object can be improved even when the viewpoint is defined farther from the exaggerated object.

It should be noted that the present invention is not limited to the above-described embodiment.

For example, although the distance between the viewpoint 54 and a representative point 56 of the game character object 40 which generates the water droplet object 42 is defined as the distance L in the above description, the distance between the viewpoint 54 and any point defined on the water droplet object 42, such as the vertices V1 through V4, or the like, of the water droplet object 42 may be defined as the distance L.

Also, although the size of a water droplet object 42 having a predetermined size is enlarged when the distance L becomes larger than the predetermined distance L1 in the above example, the size of the water droplet object 42 having a predetermined size may be reduced when the distance L is smaller than the predetermined distance L1.

Application of the present invention is not limited to image processing relevant to a game, and the present invention may be applied to any three-dimensional image processing. For example, the present invention is applicable to three-dimensional CG animation, flight simulator, driving simulator, and so forth.

**Claims**

1. An image processor for displaying an image representative of a picture of an object viewed from a viewpoint in a virtual three-dimensional space where the object and the viewpoint are placed, comprising:

   distance data calculation means for calculating distance data concerning the object and the viewpoint;
   moving state determination means for determining at least one of a moving distance and a moving speed of the object in the virtual three-dimensional space, based on the distance data;
   object moving means for moving the object in the virtual three-dimensional space based on at least one of the moving distance and the moving speed of the object, which is determined by the moving state determination means; and
   image displaying means for displaying an image representative of a picture of the object moving in the virtual three-dimensional space viewed from the viewpoint.

2. The image processor according to claim 1, further comprising:

   size information determination means for determining size information indicative of a size of the object placed in the virtual three-dimensional space, based on the distance data; and
   object enlargement and reduction means for enlarging or reducing the object according to the size information determined by the size information determination means,

   wherein the image displaying means displays an image representative of a picture of the object enlarged or reduced viewed from the viewpoint in the virtual three-dimensional space.

3. The image processor according to claim 1, wherein the distance data is data indicative of a distance between a position associated with the object and a position of the viewpoint.

4. The image processor according to claim 2, wherein the size information determination means determines a rate by which the object is enlarged or reduced as the size information of the object based on the distance data, and
the object enlargement and reduction means enlarges or reduces the object having a predetermined size by the rate.

5. An image processing method for displaying an image representative of a picture of an object viewed from a viewpoint in a virtual three-dimensional space where the object and the viewpoint are placed, comprising:

   a distance data calculating step of calculating distance data concerning the object and the viewpoint;
   a moving state determining step of determining at least one of a moving distance and a moving speed of the object in the virtual three-dimensional space, based on the distance data;
   an object moving step of moving the object in the virtual three-dimensional space based on at least one of the moving distance and the moving speed of the object, which is determined by the moving state determination means; and
   an image displaying step of displaying an image representative of a picture of the object moving in the virtual three-dimensional space viewed from the viewpoint.

6. A computer readable data storage medium for causing a computer to function as
   distance data calculation means for calculating distance data concerning an object and a viewpoint both placed in a virtual three-dimensional space;
   moving state determination means for determining at least one of a moving distance and a moving speed of the object in the virtual three-dimensional space, based on the distance data;
   object moving means for moving the object in the virtual three-dimensional space based on at least one of the moving distance and the moving speed of the object, which is determined by the moving state determination means; and
   image displaying means for displaying an image representative of a picture of the object moving in the virtual three-dimensional space viewed from the viewpoint.

# FIG.1

- 14 MICROPROCESSOR
- 16 IMAGE PROCESSING SECTION
- 18 : MONITOR
- 12
- 26 MAIN MEMORY
- 30 INPUT OUTPUT PROCESSING SECTION
- CONTROLLER
- 32
- SOUND PROCESSING SECTION
- 20
- 22 : SPEAKER
- 24 DVD-ROM REPRODUCTION SECTION
- 25 : DVD-ROM
- 11 : HOME-USE GAME MACHINE
- 10 : GAME DEVICE

EP 1 732 040 A1

## FIG.2

## FIG.3

# FIG.4

EP 1 732 040 A1

# FIG.5

# FIG.6

# FIG.7

## FIG.8

## FIG.9

## FIG.10

# FIG.11

```
┌─────────────────────────────┐
│      GAME SCREEN IMAGE       │
│   GENERATION PROCESSING      │
└─────────────────────────────┘
              │
              ▼
┌─────────────────────────────┐
│       ENVIRONMENTAL          │──── S101
│        PROCESSING            │
└─────────────────────────────┘
              │
              ▼
┌─────────────────────────────┐
│  OBJECT EXAGGERATION         │──── S102
│       PROCESSING             │
└─────────────────────────────┘
              │
              ▼
┌─────────────────────────────┐
│    GEOMETRY PROCESSING       │──── S103
└─────────────────────────────┘
              │
              ▼
┌─────────────────────────────┐
│   RENDERING PROCESSING       │──── S104
└─────────────────────────────┘
              │
              ▼
┌─────────────────────────────┐
│           RETURN             │
└─────────────────────────────┘
```

# FIG.12

```
        ┌──────────────────────────────┐
        │   OBJECT EXAGGERATION        │
        │       PROCESSING             │
        └──────────────────────────────┘
                      │
                      ▼
        ╱─────────────────────────────╲    N
        ⟨   IF EXAGGERATED OBJECT      ⟩─────────┐
        ╲       GENERATED ?            ╱          │
         ╲────────────────────────────╱  S201    │
                      │ Y                          │
                      ▼                            │
        ┌──────────────────────────────┐          │
        │  CALCULATE DISTANCE BETWEEN  │          │
        │       VIEWPOINT AND          │─S202     │
        │     EXAGGERATED OBJECT       │          │
        └──────────────────────────────┘          │
                      │                            │
                      ▼                            │
        ┌──────────────────────────────┐          │
        │ DETERMINE MAGNIFICATION RATE α│─S203    │
        └──────────────────────────────┘          │
                      │                            │
      N               ▼                   S204     │
    ┌───╱─────────────────────────────╲           │
    │   ⟨ MAGNIFICATION RATE α > 1  ? ⟩           │
    │    ╲────────────────────────────╱           │
    │                 │ Y                          │
    │                 ▼                            │
    │   ┌──────────────────────────────┐          │
    │   │  ENLARGE EXAGGERAED OBJECT   │─S205     │
    │   └──────────────────────────────┘          │
    │                 │                            │
    └────────────────►│                            │
                      ▼                            │
        ┌──────────────────────────────┐          │
        │ DETERMINE TRAJECTORY CHANGE  │─S206     │
        │          RATE β              │          │
        └──────────────────────────────┘          │
                      │◄───────────────────────────┘
                      ▼
        ┌──────────────────────────────┐
        │           RETURN             │
        └──────────────────────────────┘
```

| INTERNATIONAL SEARCH REPORT | International application No. |
|---|---|
| | PCT/JP2005/001145 |

**A. CLASSIFICATION OF SUBJECT MATTER**
Int.Cl$^7$ G06T15/00

According to International Patent Classification (IPC) or to both national classification and IPC

**B. FIELDS SEARCHED**

Minimum documentation searched (classification system followed by classification symbols)
Int.Cl$^7$ G06T15/00-17/40, A63F13/00

Documentation searched other than minimum documentation to the extent that such documents are included in the fields searched
Jitsuyo Shinan Koho     1922-1996   Jitsuyo Shinan Toroku Koho   1996-2005
Kokai Jitsuyo Shinan Koho  1971-2005   Toroku Jitsuyo Shinan Koho   1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2000-176158 A  (Taito Corp.), 27 June. 2000 (27.06.00), Par. No. [0008]; all drawings (Family: none) | 1,3,5,6 |
| Y | Same as the above | 2,4 |
| Y | JP 2002-163684 A  (Sega Corp.), 07 June, 2002 (07.06.02), Full text; all drawings & US 2002/0090995 A1 | 2,4 |

☐ Further documents are listed in the continuation of Box C.     ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 March, 2005 (25.03.05) | 19 April, 2005 (19.04.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**EP 1 732 040 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002163684 A